# EUROPEAN PATENT APPLICATION

(11) **EP 2 605 553 A2**
(43) Date of publication of application: **19.06.2013**
(21) Application number: 12197278.0
(22) Date of filing: 14.12.2012
(51) Int. Cl.: H04W 8/00

(54) **Information processing terminal apparatus and method for performing Bluetooth 3.0 + HS communication**

(30) Priority: 15.12.2011 JP 2011274591
(71) Applicant: Fujitsu Mobile Communications Limited, Kawasaki-shi, Kanagawa 211-8588 (JP)
(72) Inventor: Oguchi, Shoko, Kawasaki-shi, Kanagawa 211-8588 (JP)
(74) Representative: Lewin, David Nicholas

(57) **Abstract**

A BT 3.0 + HS control unit (6) communicates in BT 3.0 + HS. A WiFi control unit (7) performs WiFi communication. An NFC communication unit (4) performs NFC communication. If another information processing terminal apparatus approaches, a handover control unit (4) causes the NFC communication unit (4) to perform NFC communication with the information processing terminal apparatus, and switches communication with the information processing terminal apparatus from NFC communication to one or both of BT 3.0 + HS communication and WiFi communication based on the transmitted and received setting information. A communication control unit (32) determines whether or not an HS connection is used based on input information on data communication, and controls the handover control unit (4) not to switch to WiFi communication when an HS connection is used.

## Description

### FIELD

The embodiment discussed herein is related to an information processing terminal apparatus and a method for controlling an information processing terminal apparatus.

### BACKGROUND

In recent years, an apparatus including an NFC (Near Field Communication: non-contact communication) device has been provided as an information processing terminal apparatus such as a mobile phone device. In an information processing terminal apparatus including an NFC device, an operator brings information processing terminal apparatuses close to or into contact with each other to exchange authentication information in short-range wireless communication such as Bluetooth (registered trademark) and WiFi (Wireless Fidelity) (registered trademark) by the NFC device. In the following, if simply referred to as short-range wireless communication, it is assumed to exclude NFC communication. If authentication is complete in short-range wireless communication after completion of the exchange of authentication information of wireless communication in NFC, an information processing terminal apparatus can communicate in short-range wireless communication. In this manner, establishing NFC communication, then performing connection authentication of another short-range wireless communication by use of the NFC communication and switching connections may be called handover.

The handover specifications include NFC Forum Connection Handover 1.1. In this specification, specifically, it is stipulated to establish NFC communication by bringing devices close to each other and exchange device information and security information of the short-range wireless communication, instead of inputting a PIN and an encryption key. Parameters of security information to be exchanged are stipulated in SSP (Simple Secure Paring) of Bluetooth and WPS (WiFi Protected Setup) of the WiFi Alliance.

Moreover, in recent years, a specification called Bluetooth 3.0 + HS (Bluetooth Core Specification Version 3.0 High Speed) has been established for Bluetooth. Bluetooth 3.0 + HS is a specification for realizing highspeed communication using wireless communication such as WLAN (Wireless Local Area Network) in cases such as when large-capacity data is transmitted in a state of communicating through Bluetooth. In the following, Bluetooth is abbreviated to "BT", and further Bluetooth 3.0 + HS to "BT 3.0 + HS." Moreover, WiFi communicates using WLAN in conformity with IEEE 802.11.

In the specified operation of NFC, an apparatus of a handover request source requests an apparatus of a handover request destination for handovers to BT and WiFi if the powers of BT and WLAN devices are ON in the apparatus itself. The apparatus of the handover request destination determines whether or not the powers of devices that handle communications for which handovers have been requested are ON in the apparatus itself. The apparatus of the handover request destination then transmits a notification of a connectable state to the apparatus of the handover request source if the power of the corresponding device is ON. In contrast, the apparatus of the handover request destination transmits a notification of an unconnectable state to the apparatus of the handover request source if the power of the corresponding device is OFF. The apparatus of the handover request source can establish communication that has received the notification of a connectable state. But it is difficult for the apparatus of the handover request source to establish communication for the communication that has received the notification of an unconnectable state and the apparatus of the handover request source performs processes such as a retry of the handover request.

As a handover technology, there is a known technology that selects the type of short-range wireless communication depending on the setting and capability of the other party and communicates upon handover. Moreover, there is a known technology that determines from the header information of the received WLAN frame whether to be BT 3.0 + HS communication and transmits the frame to a processing system of BT 3.0 + HS in the case of a BT frame.
Patent Document 1: Japanese Laid-open Patent Publication No. 2009-207069
Patent Document 2: Japanese Laid-open Patent Publication No. 2011-35632

However, if it is attempted to transmit large-capacity data using BT 3.0 + HS communication, when WiFi communication is being connected, BT 3.0 + HS communication uses the same physical layer (MAC/PHY) as WiFi communication; accordingly, it is not possible to establish a BT 3.0 + HS communication connection in that state. In this case, after the WiFi communication connection is closed, a new connection is established to transmit the large-capacity data using the BT 3.0 + HS communication. Therefore, it is not possible to transmit the large-capacity data using the BT 3.0 + HS communication during the time from the connection and disconnection of the WiFi communication, which is a waste of time, and it takes time for requested processes such as data transmission. Moreover, if the large-capacity data is transmitted in the BT 3.0 + HS communication, the WiFi communication is disconnected in the end; however, a WiFi communication connection is established if a WiFi device is ON. Also in this case, if the power of the WiFi device of the handover connection destination is OFF, a retry process and the like are performed; however, the WiFi communication may fail. Therefore, the time is spared for a WiFi communication connection that will soon be closed even if established; accordingly, wasted time occurs and it takes time for requested processes such as data transmission.

Moreover, since the selection of communication in accordance with the operation of the apparatus itself is not stipulated even with the known technology that selects the type of short-range wireless communication depending on the setting and capability of the other party and communicates upon handover; accordingly, the power states of the physical layers of BT/WLAN of the apparatus itself are notified to give the other party the authorization to select the type of communication of a handover. Therefore, it is not possible to establish communication that takes the application operation of the apparatus itself into consideration and wasted time such as a decrease in connectivity and a reconnection process occurs. Hence, quick data transmission is difficult. Moreover, it is not possible to select communication depending on the operation of the apparatus itself even with the known technology that determines based on the header information of the received WLAN frame whether to be the BT communication to process. Again, wasted time occurs and quick data transmission is not possible.

Accordingly, it is an object in one aspect of an embodiment of the invention to provide an information processing terminal apparatus and a method for controlling an information processing terminal apparatus, which quickly transmit data using short-range wireless communication that competes with another communication.

### SUMMARY

According to an aspect of the embodiments, an information processing terminal apparatus includes: a first communication unit that performs first short-range wireless communication and second short-range wireless communication that communicates in a state of performing the first short-range wireless communication; a second communication unit that performs third short-range wireless communication that competes with the second short-range wireless communication; a third communication unit that performs fourth short-range wireless communication that transmits and receives setting information of the first short-range wireless communication and the third short-range wireless communication; a communication establishment unit that causes the third communication unit to perform the fourth short-range wireless communication with another information, processing terminal apparatus when the another information processing terminal apparatus approaches, and establishes one or both of connections to the another information processing terminal apparatus in the first short-range wireless communication and the third short-range wireless communication, based on transmitted and received setting information; and a communication control unit that determines whether or not the second short-range wireless communication is used based on input communication, information, and controls the communication establishment unit not to establish a connection in the third short-range wireless communication when the second short-range wireless communication is used.

### BRIEF DESCRIPTION OF DRAWINGS

FIG. 1 is a block diagram of a mobile phone device according to an embodiment;
FIG. 2 is a view illustrating an example of management information stored in a state management unit;
FIG. 3 is a sequence diagram of processing of establishing an HS connection in the mobile phone device according to the embodiment;
FIG. 4 is a flowchart of processing of data communication in the mobile phone device according to the embodiment;
FIG. 5 is a view for explaining the outline of operations of when data communication is performed through an HS connection; and
FIG. 6 is a hardware configuration diagram of the mobile phone device according to the embodiment.

### DESCRIPTION OF EMBODIMENTS

Preferred embodiments of the present invention will be explained with reference to accompanying drawings.

The following embodiment does not limit the information processing terminal apparatus and the method for controlling an information processing terminal apparatus, which are disclosed in the application. In the following, a description will be given of an information processing terminal apparatus, especially taking an example of a mobile phone device; however, the information processing terminal apparatus is not limited to this if being possible to perform two or more types of short-range wireless communications that compete with each other. Moreover, a description will be given below of an information processing terminal apparatus of a communication destination being a target of a handover request and the like, taking an example of a mobile phone device; however, the corresponding apparatus being the communication destination is not limited to this and may be another information processing terminal apparatus such as a PC (Personal Computer).

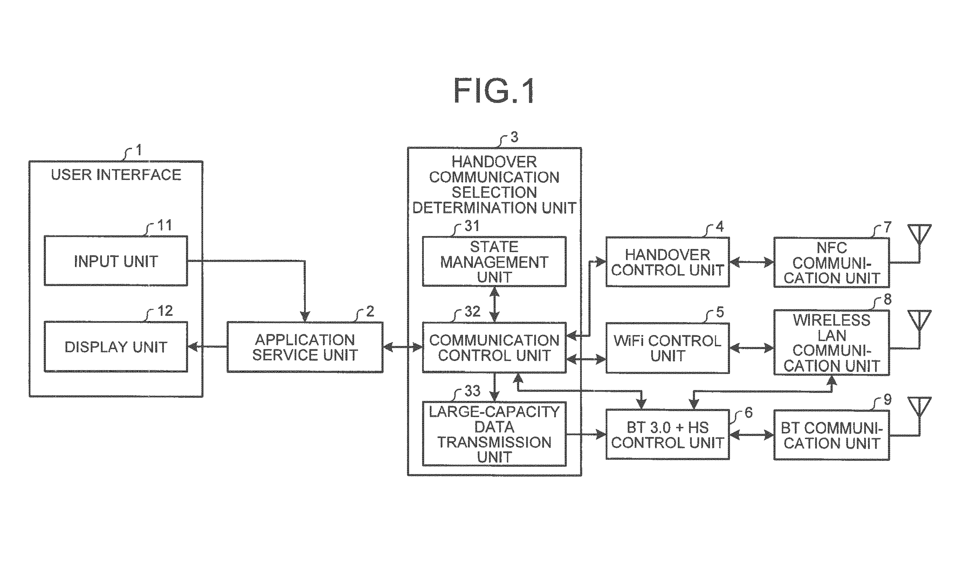

FIG. 1 is a block diagram of a mobile phone device according to an embodiment. As illustrated in FIG. 1, the mobile phone device according to the embodiment includes a user interface 1, an application service unit 2, and a handover communication selection determination unit 3. Furthermore, the mobile phone device according to the embodiment includes a handover control unit 4, a WiFi control unit 5, a BT 3.0 + HS control unit 6, an NFC communication unit 7, a wireless LAN communication unit 8, and a BT communication unit 9.

The user interface 1 includes an input unit 11 and a display unit 12. An operator inputs and acquires information using the user interface.

The input unit 11 receives the input of information from the operator through a keypad and the like. The input unit 11 then outputs the information input from the operator to the application service unit 2.

The display unit 12 receives the data from the application service unit 2. The display unit 12 then displays the received data on a monitor and the like to provide to the operator. For example, if receiving a direction to display a screen that prompts a proximity operation from the application service unit 2, the display unit 12 displays the screen that prompts a proximity operation on a monitor and the like to provide to the operator.

The application service unit 2 includes a phone book application and OPP (Object Push Profile). OPP is a Bluetooth profile used upon exchange of data such as business card data and calendar data. The phone book application is an application to transmit data to another information processing terminal apparatus using OPP.

The application service unit 2 executes an application in accordance with a direction of the operator input from the input unit 11. For example, if a direction to transmit phone book data using OPP is input, the application service unit 2 executes the phone book application. If communication is requested in a process for the execution of the application, the application service unit 2 notifies a direction to execute a handover to a communication control unit 32, which will be described later, in the handover communication selection determination unit 3. For example, if the phone book application requests the transmission of the phone book data using OPP, the application service unit 2 directs the communication control unit 32 to execute a handover. At this point, the application service unit 2 notifies the communication control unit 32 that the apparatus itself fills the role of a handover request source. Furthermore, the application service unit 2 outputs a connection request of a communication to be used to the communication control unit 32. For example, if being directed to transfer data using a BT communication, the application service unit 2 outputs a connection request of the BT communication to the communication control unit 32.

After making a request to execute a handover, the application service unit 2 receives from the communication control unit 32 a notification to the effect that it has acquired state information of WiFi communication and the BT communication. The application service unit 2 then directs the display unit 12 to display the screen that prompts a proximity operation.

The handover communication selection determination unit 3 includes a state management unit 31, the communication control unit 32, and a large-capacity data transmission unit 33.

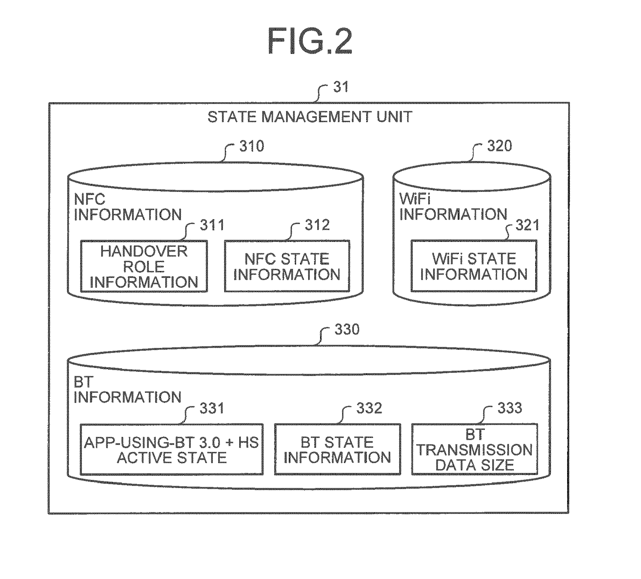

The state management unit 31 includes a storage device such as memory. The state management unit 31 stores management information including a control state of BT 3.0 + HS communication and a control state of the WiFi communication. FIG. 2 is a view illustrating an example of management information stored in the state management unit. In the embodiment, the state management unit 31 stores NFC information 310, WiFi information 320 and BT information 330 as illustrated in FIG. 2. The NFC information 310 includes handover role information 311 that indicates the role that the apparatus itself takes in handover, in other words whether the apparatus itself is a handover request source or destination, and NFC state information 312 that indicates whether or not NFC communication is being connected. The WiFi information 320 includes WiFi state information 321 that indicates states such as whether or not the WiFi communication is being connected and whether or not the power is ON. The BT information 330 includes an app-using-BT 3.0 + HS active state 331, BT state information 332 and a BT transmission data size 333. The app-using-BT 3.0 + HS active state 331 is information that indicates an active state of each application using BT 3.0 + HS. The BT state information 332 is information that indicates states such as the BT communication is being connected and whether or not the power is ON. The BT transmission data size 333 is a size of data transmitted using BT.

The state management unit 31 receives from the communication control unit 32 the input of information on the power state indicating whether the powers of devices of the WiFi communication and the BT communication are ON or OFF at the time of starting a handover in NFC. The state management unit 31 then updates the contents of the WiFi state information 321 and the BT state information 332 with the acquired information on the power state. Moreover, the state management unit 31 receives from the communication control unit 32 a direction to change the state information of the NFC communication if the NFC communication is established. The state management unit 31 then changes the contents of the NFC state information 312 stored therein to the connected state. Moreover, the state management unit 31 acquires a direction to change the state information from the communication control unit 32 if a WiFi communication connection or a BT communication connection is established. The state management unit 31 then changes the content of the WiFi state information 321 or the BT state information 332, which are stored therein, to the connected state.

If receiving from the application service unit 2 a request to execute a handover and a connection request of the BT 3.0 + HS communication, the communication control unit 32 acquires the NFC information 310, the WiFi information 320, and the BT information 330, which are stored in the state management unit 31. If acquiring the WiFi information 320 and the BT information 330, the communication control unit 32 outputs to the application service unit 2 a notification to the effect that it has acquired the state information of the WiFi communication and the BT communication.

If an operator brings mobile phone devices close to each other and the NFC communication is established, the communication control unit 32 receives a notification of the establishment of the NFC communication from the handover control unit 4. The communication control unit 32 then notifies the state management unit 31 that the content of the NFC state information 312 is changed to "connected." Furthermore, if the NFC communication is established, the communication control unit 32 outputs a request to acquire information on the state of the BT communication, or specifically, whether the power is ON or OFF, to the WiFi control unit 5 and the BT 3.0 + HS control unit 6. The communication control unit 32 then acquires the information on the power states of devices for the WiFi communication and the BT communication from the WiFi control unit 5 and the BT 3.0 + HS control unit 6. The acquired information on the power states is output to the state management unit 31.

Next, the communication control unit 32 references the app-using-BT 3.0 + HS active state 331, the BT state information 332 and the BT transmission data size 333, which are included in the state management unit 31. If the application using BT 3.0 + HS is running, the BT communication is powered and is not yet established, and the BT transmission data size is larger than a threshold value, the communication control unit 32 directs the handover control unit 4 to perform a handover to the BT 3.0 + HS communication. Here, the threshold value of the BT transmission data size is a threshold value for determining whether to transmit data using wireless LAN in the BT 3.0 + HS communication. In other words, if the size of data to be transmitted exceeds the threshold value, data is large; accordingly, it takes time for data transmission in normal Bluetooth communication. Therefore, the speed is increased by data transmission using wireless LAN communication. If the above conditions are satisfied, the communication control unit 32 inhibits a handover to the WiFi communication to use a wireless LAN device in the BT communication and controls to perform a handover only to the BT communication. On the other hand, if the above conditions are not satisfied, the communication control unit 32 directs the handover control unit 4 to perform a handover to a communication whose power is ON between the WiFi communication and the BT 3.0 + HS communication.

The communication control unit 32 acquires from the handover control unit 4 setting information of the communication being a handover target as a response to the handover direction. The communication control unit 32 then outputs a connection request together with the setting information of the communication being the handover target to a control unit of the communication being the handover target between the WiFi control unit 5 and the BT 3.0 + HS control unit 6. For example, if data is transmitted through the wireless LAN communication in the BT communication, in other words, if a handover to the WiFi communication is inhibited, the communication control unit 32 transmits the setting information of the BT communication to the BT 3.0 + HS control unit 6 and makes a connection request of the BT communication. Furthermore, if data is transmitted through the wireless LAN communication in the BT communication, the communication control unit 32 requests the BT 3.0 + HS control unit 6 for a connection in the wireless LAN communication (hereinafter referred to as "HS connection"). Moreover, if handovers are performed on both of the WiFi communication and the BT 3.0 + HS communication, the communication control unit 32 transmits the setting information of the WiFi communication to the WiFi control unit 5 and makes a connection request of the WiFi communication. Furthermore, the communication control unit 32 transmits the setting information of the BT communication to the BT 3.0 + HS control unit 6 and makes a connection request of the BT communication.

After completion of the connection, the communication control unit 32 receives a notification of the completion of the connection from the control unit that has made the connection request between the WiFi control unit 5 and the BT 3.0 + HS control unit 6. For example, if data is transmitted through the wireless LAN communication in the BT communication, the communication control unit 32 receives from the BT 3.0 + HS control unit 6 a notification of the completion of the BT connection and a notification of the completion of the HS connection. After receipt of the notification of the completion of the connection, the communication control unit 32 notifies the state management unit 31 to change the state information on the one that has notified the completion of the connection between the WiFi control unit 5 and the BT 3.0 + HS control unit 6 to the connected state.

Furthermore, the communication control unit 32 directs the WiFi control unit 5 or the BT 3.0 + HS control unit 6 to transmit and receive data based on the data transmission/receipt direction received from the application service unit 2. However, if the size of data to be transmitted in the BT communication exceeds the threshold value, the communication control unit 32 outputs an instruction to transmit large-sized data to the large-capacity data transmission unit 33. For example, if receiving a request to transmit phone book data using OPP from the application service unit 2, the communication control unit 32 outputs to the large-capacity data transmission unit 33 an instruction to transmit the phone book data using OPP, when the phone book data is large.

If large-sized data is transmitted in the BT communication, the large-capacity data transmission unit 33 receives an instruction to transmit the large-sized data from the communication control unit 32. The large-capacity data transmission unit 33 then outputs a communication request of the directed large-capacity data to the BT 3.0 + HS control unit 6. For example, if receiving an instruction to transmit the phone book data using OPP from the communication control unit 32, the large-capacity data transmission unit 33 transmits the phone book data to the BT 3.0 + HS control unit 6. Furthermore, the large-capacity data transmission unit 33 outputs a request to transmit the phone book data using OPP to the BT 3.0 + HS control unit 6.

The handover control unit 4 notifies the NFC communication unit 7 that the apparatus itself is the handover request source. If the operator subsequently brings the mobile phone devices close to each other, the handover control unit 4 receives the input of a notification of the establishment of the NFC communication from the NFC communication unit 7. The handover control unit 4 then outputs the notification of the establishment of the NFC communication to the communication control unit 32.

Moreover, the handover control unit 4 receives an instruction to execute a handover from the communication control unit 32. The handover control unit 4 then creates a handover packet to a designated communication. The handover control unit 4 then outputs the created handover packet to the NFC communication unit 7. Furthermore, the handover control unit 4 directs the NFC communication unit 7 to transmit the created handover packet. The handover control unit 4 then receives from the NFC communication unit 7 a handover response including a handover packet from the handover request destination. The handover control unit 4 then analyzes the handover packet from the mobile phone device of the handover request destination and acquires the setting information of the communication of the handover target. The handover control unit 4 subsequently outputs to the communication control unit 32 the setting information of the communication of the handover target together with a notification to the effect that a handover is possible.

For example, if large-sized phone book data is transmitted using OPP, the handover control unit 4 receives an instruction to execute a handover to the BT communication from the communication control unit 32. Next, the handover control unit 4 creates a handover packet of the BT communication. The handover control unit 4 then directs the NFC communication unit 7 to transmit the handover packet of the BT communication. The handover control unit 4 subsequently receives from the NFC communication unit 7 the handover packet of the BUT communication of the mobile phone device of the handover request destination. The handover control unit 4 then analyzes the received handover packet and outputs to the communication control unit 32 the setting information of the BT communication of the mobile phone device of the handover request destination. The handover control unit 4 corresponds to an example of a "communication establishment unit."

The WiFi control unit 5 receives from the communication control unit 32 a request for information on whether the power of the WiFi communication is ON or OFF. The WiFi control unit 5 then checks whether the power of the WiFi communication device is ON or OFF, and notifies the communication control unit 32 of the checked power state of the WiFi communication device.

Moreover, if receiving from the communication control unit 32 the connection request of the WiFi communication together with the setting information of the WiFi communication, the WiFi control unit 5 directs the wireless LAN communication unit 8 to establish the WiFi communication using the setting information. If the WiFi communication is established, the WiFi control unit 5 receives a notification of the establishment of the WiFi communication from the wireless LAN communication unit 8. The WiFi control unit 5 subsequently outputs the notification of the establishment of the WiFi communication to the communication control unit 32.

After acquisition of the WiFi information of the corresponding device by the handover, the WiFi control unit 5 receives a request to transmit and receive data, and the like from the communication control unit 32. The WiFi control unit 5 then performs authenticated and encrypted data communication in conformity with the WiFi Alliance using the wireless LAN communication unit 8. The WiFi control unit 5 corresponds to an example of a "second communication unit." The WiFi communication corresponds to "third short-range wireless communication."

The BT 3.0 + HS control unit 6 receives from the communication control unit 32 a request for information on whether the power of the BT communication is ON or OFF. The BT 3.0 + HS control unit 6 then checks whether the power of the BT communication device is ON or OFF and notifies the communication control unit 32 of the checked power state of the BT communication device.

Moreover, if receiving from the communication control unit 32 the connection request of the BT communication together with the setting information of the BT communication, the BT 3.0 + HS control unit 6 directs the BT communication unit 9 to establish the BT communication using the setting information. If the BT communication is established, the BT 3.0 + HS control unit 6 receives a notification of the establishment of the BT communication from the BT communication unit 9. The BT 3.0 + HS control unit 6 subsequently outputs the notification of the establishment of the BT communication to the communication control unit 32. Furthermore, if receiving an HS connection request from the communication control unit 32, the BT 3.0 + HS control unit 6 transmits the HS connection request to the wireless LAN communication unit 8. If an HS connection is established, the BT 3.0 + HS control unit 6 receives a notification of the establishment of the HS connection from the wireless LAN communication unit 8. The BT 3.0 + HS control unit 6 subsequently outputs the notification of the establishment of the HS connection to the communication control unit 32.

After the BT communication is established, the BT 3.0 + HS control unit 6 receives a request to transmit and receive data of the BT communication, and the like from the communication control unit 32. The BT 3.0 + HS control unit 6 then transmits and receives data in the BT communication using the BT communication unit 9.

Moreover, after an HS connection is established, the BT 3.0 + HS control unit 6 receives the request to transmit the large-capacity data from the large-capacity data transmission unit 33. The BT 3.0 + HS control unit 6 then directs the wireless LAN communication unit 8 to transmit the received large-capacity data to another mobile phone device. For example, the BT 3.0 + HS control unit 6 directs the wireless LAN communication unit 8 to transmit the phone book data using OPP. The BT 3.0 + HS control unit 6 corresponds to an example of a "first communication unit." The BT communication corresponds to an example of "first short-range wireless communication," and communication through an HS connection corresponds to an example of "second short-range wireless communication."

The NFC communication unit 7 receives a notification to the effect that the apparatus itself is the handover request source from the handover control unit 4. If the apparatus itself subsequently approaches another mobile phone device, the NFC communication unit 7 establishes the NFC communication with the mobile phone device. The NFC communication unit 7 then outputs a notification of the establishment of the NFC communication to the handover control unit 4.

The NFC communication unit 7 receives the input of a handover packet from the handover control unit 4. The NFC communication unit 7 then transmits the handover packet to the mobile phone device being the handover request destination. The NFC communication unit 7 subsequently receives a handover response including a handover packet from the mobile phone device being the handover request destination. The NFC communication unit 7 then outputs the received handover response to the handover control unit 4. The NFC communication unit 7 corresponds to an example of a "third communication unit." The NFC communication corresponds to an example of "fourth short-range wireless communication."

The wireless LAN communication unit 8 is a physical communication unit, in conformity with the specification of IEEE 802.11, that transmits and receives a WiFi packet and an HS communication packet. The wireless LAN communication unit 8 receives the setting information of the WiFi communication from the WiFi control unit 5. Next, the wireless LAN communication unit 8 establishes the WiFi communication with another mobile phone device using the setting information. The wireless LAN communication unit 8 then notifies the WiFi control unit 5 that the connection in the WiFi communication is complete. Subsequently receiving a direction to transmit and receive data in the WiFi communication from the WiFi control unit 5, the wireless LAN communication unit 8 transmits and receives data with WiFi packets using the WiFi communication.

Moreover, in the case of large-capacity data transmission using the BT 3.0 + HS communication such as the transmission of the phone book data using OPP, the wireless LAN communication unit 8 receives an HS connection request from the BT 3.0 + HS control unit 6. The wireless LAN communication unit 8 then establishes an HS connection with another mobile phone device that has already established the BT communication. The wireless LAN communication unit 8 subsequently notifies the establishment of an HS connection to the BT 3.0 + HS control unit 6. After establishment of an HS connection, the wireless LAN communication unit 8 receives a direction to transmit the large-capacity data from the BT 3.0 + HS control unit 6. For example, the wireless LAN communication unit 8 receives from the BT 3.0 + HS control unit 6 a direction to transmit the phone book data using OPP. The wireless LAN communication unit 8 then transmits to another mobile phone device the large-capacity data designated by the BT 3.0 + HS control unit 6 in HS communication packets using the HS connection.

The BT communication unit 9 is a physical communication unit, in conformity with the specification of Bluetooth, that transmits and receives an authentication packet, a L2CAP (Logical Link Control and Adaptive Protocol) packet, and the like. The BT communication unit 9 acquires the setting information of the BT communication from the BT 3.0 + HS control unit 6. Furthermore, receiving a BT connection request from the BT 3.0 + HS control unit 6, the BT communication unit 9 establishes the BT communication with another mobile phone device using the acquired setting information of the BT communication. The BT communication unit 9 then notifies the BT 3.0 + HS control unit 6 that the connection of the BT communication is complete. Subsequently, receiving a direction to transmit and receive data in the BT communication from the BT 3.0 + HS control unit 6, the BT communication unit 9 transmits and receives data using the BT communication.

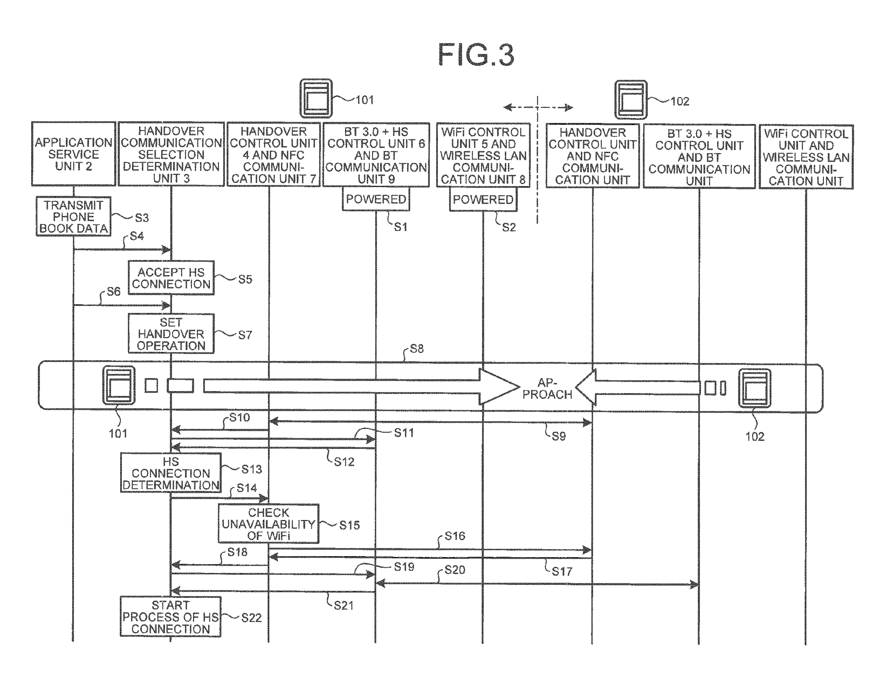

Next, a description will be given of a flow of the establishment of an HS connection in the mobile phone device according to the embodiment with reference to FIG. 3. FIG. 3 is a sequence diagram of processing of establishing an HS connection in the mobile phone device according to the embodiment.

The operations written on the vertical lines extending from the units described in FIG. 3 are processes performed in the units. Moreover, the arrows connecting between the vertical lines represent the flow of data or instructions. Moreover, with regard to the units described in FIG. 3, the left side of the alternate long and short dash line represents the units of a mobile phone device 101, and the right side represents the units of a mobile phone device 102. Furthermore, in FIG. 3, a description will be given of a case where the mobile phone device 101 is a handover request source, and the mobile phone device 102 is a handover request destination.

Firstly, a state where the power of a BT device in the mobile phone device 101 is ON (Step S1). Moreover, a state where the power of a WiFi device in the mobile phone device 101 is ON (Step S2). Here, Steps S1 and S2 are prerequisites for the execution of the processing of establishing an HS connection, and if the power of the devices is ON, it may be unnecessary to perform the processing in this stage.

Receiving a direction from the operator, the application service unit 2 then executes the phone book application and starts the process to transmit the phone book data (Step S3).

The application service unit 2 outputs an HS connection request to the handover communication selection determination unit 3 (Step S4). The handover communication selection determination unit 3 receives the HS connection request from the application service unit 2 and accepts an HS connection (Step S5).

Furthermore, the application service unit 2 outputs a notification that the apparatus itself acts as a handover communication source to the handover communication selection determination unit 3 (Step S6). Receiving the notification from the application service unit 2, the handover communication selection determination unit 3 stores the information that the apparatus itself acts as a handover communication source in the state management unit 31 and sets the handover operation of the apparatus itself (Step S7). The handover communication selection determination unit 3 then notifies the handover control unit 4 that the apparatus itself is the handover communication source, and notifies the application service unit 2 that the update of the state is complete.

The application service unit 2 causes the display unit 12 to display a prompt of the proximity operation for the operator. The operator checks the display prompting the proximity operation, and brings the mobile phone device 101 close to the mobile phone device 102 (Step S8). Therefore, the NFC communication is established between the NFC communication unit 7 of the mobile phone device 101 and an NFC communication unit of the mobile phone device 102 (Step S9).

If the NFC communication is established, the handover control unit 4 outputs a notification of the establishment of the NFC communication to the handover communication selection determination unit 3 (Step S10).

Confirming that the NFC communication has been established, the handover communication selection determination unit 3 outputs to the BT 3.0 + HS control unit 6 a request to acquire information on the state of the BT communication, or specifically, information on whether the power of the device is ON or OFF (Step S11). The handover communication selection determination unit 3 then outputs to the handover communication selection determination unit 3 a response to the request to acquire the state of the BT communication, in other words, a notification that the power of the BT communication device is ON (Step S12).

Confirming that the power of the BT communication device is ON, the handover communication selection determination unit 3 determines whether to perform an HS connection using the BT information 330 stored in the state management unit 31 (Step S13).

If determining to perform an HS connection, the handover communication selection determination unit 3 outputs to the handover control unit 4 a direction that the WiFi communication is not available and an instruction to execute a handover to the BT communication (Step S14).

The handover control unit 4 checks that WiFi is not available in response to the direction from the handover communication selection determination unit 3 (Step S15). Moreover, the handover control unit 4 receives the instruction to execute a handover to the BT communication from the handover communication selection determination unit 3, and creates a handover packet of the BT communication. The NFC communication unit 7 then outputs the handover packet created by the handover control unit 4 to the NFC communication unit of the mobile phone device 102 and requests the mobile phone device 102 for a handover to the BT communication (Step S16).

A handover control unit of the mobile phone device 102 receives the handover packet from the NFC communication unit. The handover control unit of the mobile phone device 102 creates a handover packet of the BT communication for a response. The NFC communication unit of the mobile phone device 102 outputs the handover packet created by the handover control unit to the NFC communication unit 7 of the mobile phone device 101 and notifies the mobile phone device 101 to accept the handover to the BT communication (Step S17).

The handover control unit 4 notifies the handover communication selection determination unit 3 of the setting information of BT communication of the mobile phone device 102 (Step S18).

The handover communication selection determination unit 3 outputs the setting information of the BUT communication of the mobile phone device 102 to the BT 3.0 + HS control unit 6 and requests a BT communication connection (Step S19).

Receiving the request for a BT communication connection, the BT 3.0 + HS control unit 6 and the BT communication unit 9 establish the BT communication with a BT 3.0 + HS control unit and a BT communication unit of the mobile phone device 102 using the received setting information (Step S20).

The BT 3.0 + HS control unit 6 outputs a notification of the establishment of the BT communication to the handover communication selection determination unit 3 (Step S21). Receiving the notification of the establishment of the BT communication, the handover communication selection determination unit 3 starts the process of an HS connection (Step S22). The handover communication selection determination unit 3 subsequently directs the BT 3.0 + HS control unit 6 to perform an HS connection using the wireless LAN communication unit 8. If an HS connection is established, the handover communication selection determination unit 3 directs the BT 3.0 + HS control unit 6 to transmit large-capacity data through the HS connection. The BT 3.0 + HS control unit 6 transmits the large-capacity data to the mobile phone device 102 using the wireless LAN communication unit 8.

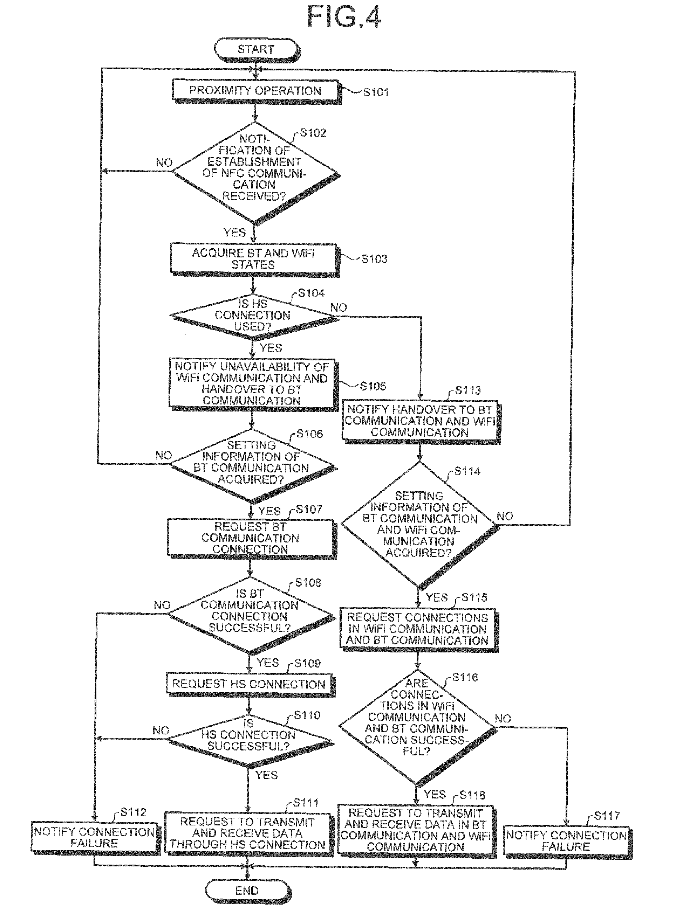

Next, a description will be given of the flow of processing of data communication in the mobile phone device according to the embodiment with reference to FIG. 4. FIG. 4 is a flowchart of processing of data communication in the mobile phone device according to the embodiment.

The operator performs a proximity operation that brings mobile phone devices close to each other (Step S101).

The communication control unit 32 determines whether to have received a notification of the establishment of the NFC communication from the handover control unit 4 (Step S102). If not having received the notification of the establishment of the NFC communication (Step S102: negative), the communication control unit 32 outputs a request to display a prompt of proximity to the application service unit 2 and returns to Step S101.

In contrast, if having received the notification of the establishment of the NFC communication (Step S102: positive), the communication control unit 32 acquires the states of the WiFi communication and the BT communication, which indicate that their respective powers are ON or OFF, from the WiFi control unit 5 and the BT 3.0 + HS control unit 6 (Step S103).

Next, the communication control unit 32 determines from the information stored in the state management unit 31 whether to use an HS connection (Step S104). If using an HS connection (Step S104: positive), the communication control unit 32 outputs to the handover control unit 4 a notification that the WiFi communication is not available and a notification of the execution of a handover to the BT communication (Step S105).

The communication control unit 32 subsequently determines whether to have acquired the setting information of the BT communication from the handover control unit 4 (Step S106). If not having acquired the setting information (Step S106: negative), the processing returns to Step S101.

In contrast, if acquiring the setting information (Step S106: positive), the communication control unit 32 requests the BT 3.0 + HS control unit 6 for a BT communication connection (Step S107).

The BT 3.0 + HS control unit 6 uses the BT communication unit 9 to carry out a BT communication connection to another mobile phone device using the setting information. The communication control unit 32 determines whether or not the BT communication connection to another mobile phone device is successful (Step S108). If the BT communication connection is not successful (Step S108: negative), the communication control unit 32 directs the application service unit 2 to notify the operator of connection failure. The application service unit 2 displays the notification of connection failure on the display unit 12 to end the processing (Step S112).

In contrast, if the BT communication connection is successful (Step S108: positive), the communication control unit 32 requests the BT 3.0 + HS control unit 6 for an HS connection (Step S109).

The BT 3.0 + HS control unit 6 uses the wireless LAN communication unit 8 to carry out an HS connection to another mobile phone device. The communication control unit 32 determines whether or not the HS connection to another mobile phone is successful (Step S110). If the HS connection is not successful (Step S110: negative), the communication control unit 32 directs the application service unit 2 to notify the operator of connection failure. The application service unit 2 causes the display unit 12 to display the notification of connection failure to end the processing (Step S112).

In contrast, if the HS connection is successful (Step S110: positive), the large-capacity data transmission unit 33 requests the BT 3.0 + HS control unit 6 to transmit large-capacity data through the HS connection (Step S11).

On the other hand, if not using the HS connection (Step S104: negative), the communication control unit 32 outputs to the handover control unit 4 a notification of the execution of handovers to the BT communication and the WiFi communication (Step S113).

The communication control unit 32 subsequently determines whether to have acquired the setting information of the BT communication and the WiFi communication from the handover control unit 4 (Step S114). If the setting information has not been acquired (Step S114: negative), the processing returns to Step S101.

In contrast, if having acquired the setting information (Step S114: positive), the communication control unit 32 requests the WiFi control unit 5 for a WiFi communication connection and requests the BT 3.0 + HS control unit 6 for a BT communication connection (Step S115).

The WiFi control unit 5 uses the wireless LAN communication unit 8 to carry out a BT communication connection to another mobile phone device using the setting information. Moreover, the BT 3.0 + HS control unit 6 uses the BT communication unit 9 to carry out a BT communication connection to another mobile phone device using the setting information. The communication control unit 32 determines whether or not connections to another mobile phone device in the WiFi communication and the BT communication are successful (Step S116). If one or either of connections in the WiFi communication and the BT communication is/are not successful (Step S116: negative), the communication control unit 32 directs the application service unit 2 to notify the operator of connection failure. The application service unit 2 causes the display unit 12 to display the notification of connection failure to end the processing (Step S117). In contrast, if connections in the WiFi communication and the BT communication are successful (Step S116: positive), the communication control unit 32 requests the WiFi control unit 5 and the BT 3.0 + HS control unit 6 to transmit and receive data in the WiFi communication and the BT communication (Step S118).

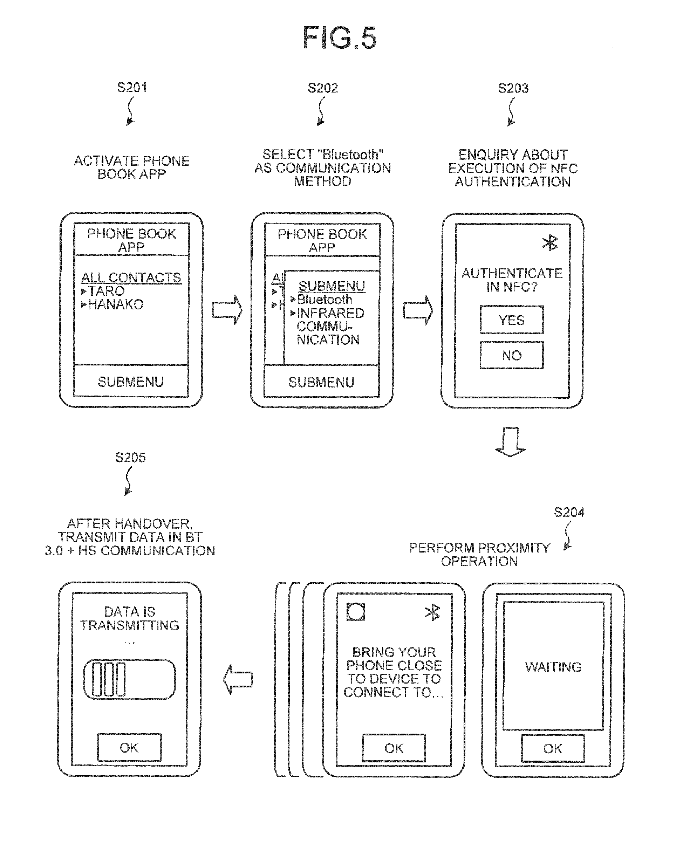

Next, a description will be given of the outline of operations of when data communication is performed through an HS connection with reference to FIG. 5. FIG. 5 is a view for explaining the outline of operations of when data communication is performed through an HS connection.

The operator activates the phone book application on his/her mobile phone device (Step S201).

Next, the operator opens a submenu for selecting a communication method of the phone book application and selects Bluetooth as a communication method (Step S202).

The operator then authenticates the Bluetooth communication using the NFC communication and receives an enquiry about whether to perform a handover (the drawing indicates "NFC AUTHENTICATION") from the mobile phone device (Step S203).

The operator inputs permission to execute a handover to the Bluetooth communication using the NFC communication. The operator subsequently brings his/her mobile phone device close to a mobile phone device of a handover request destination (Step S204).

In response to the proximity operation, the mobile phone device performs a handover to the Bluetooth communication and establishes a Bluetooth communication, connection. The mobile phone device subsequently transmits the phone book data and the like through the HS connection in the BT 3.0 + HS communication to the mobile phone device of the handover request destination (Step S205).

As described above, the information processing terminal apparatus according to the embodiment includes the functions of the WiFi communication and the BT 3.0 + HS communication, and performs a handover only to the BT communication without performing a handover to the WiFi communication if an HS connection is carried out. Therefore, if data is transmitted through the HS connection, it is possible to avoid a state where the WiFi communication is connected and reduce wasted time in communication processes such as connection and disconnection of the WiFi communication. Moreover, a WiFi communication connection, which is to be disconnected, is not carried out; accordingly, it is possible to suppress the occurrence of a wasteful retry process and the like. Also in this point, it is possible to reduce wasted time in communication processes. In this manner, if large-capacity data is requested to be transmitted using BT 3.0 + HS, the information processing terminal apparatus according to the embodiment can perform a requested process quickly and shorten a processing time.

### Hardware Configuration

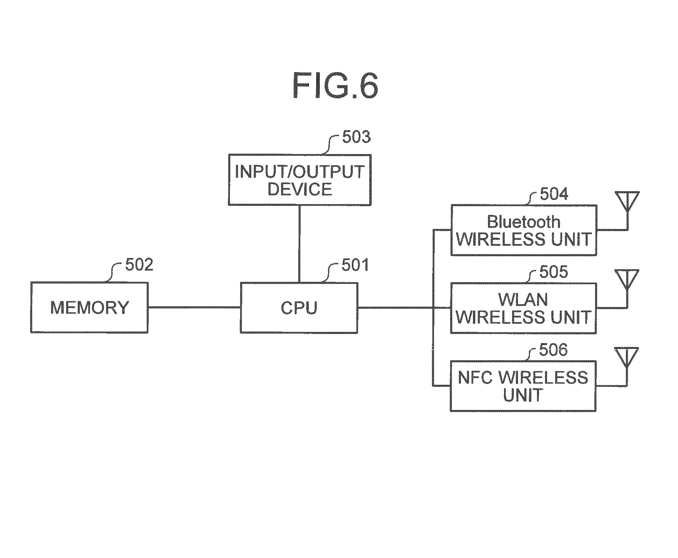

Next, a description will be given of a hardware configuration of the mobile phone device according to the embodiments with reference to FIG. 6. FIG. 6 is a hardware configuration diagram of the mobile phone device according to the embodiment.

As illustrated in FIG. 6, the mobile phone device according to the embodiment includes a CPU (Central Processing Unit) 501, a memory 502, an input/output device 503, a Bluetooth wireless unit 504, a WLAN wireless unit 505, and an NFC wireless unit 506.

The memory 502, the input/output device 503, the Bluetooth wireless unit 504, the WLAN wireless unit 505 and the NFC wireless unit 506 are each connected to the CPU 501 via a bus.

The Bluetooth wireless unit 504 realizes the function of the BT communication unit 9 illustrated in FIG. 1, for example. The WLAN wireless unit 505 realizes the function of the wireless LAN communication unit 8 illustrated in FIG. 1, for example. The NFC wireless unit 506 realizes the function of the NFC communication unit 7 illustrated in FIG. 1, for example.

Moreover, the input/output device 503 includes, for example, a liquid crystal monitor and a keypad. The input/output device 503 realizes the function of the user interface 1 illustrated in FIG. 1, for example.

The CPU 501 and the memory 502 realize the functions of the application service unit 2, the handover communication selection determination unit 3, the handover control unit 4, the WiFi control unit 5 and the BT 3.0 + HS control unit 6, which are illustrated in FIG. 1, for example. For example, various programs to realize processes by the application service unit 2, the handover communication selection determination unit 3, the handover control unit 4, the WiFi control unit 5, the BT 3.0 + HS control unit 6, and the like, which are illustrated in FIG. 1, are stored in the memory 502. The CPU 501 and the memory 502 read and execute these various programs to create processes that realize the above-mentioned functions.

An aspect of an information processing terminal apparatus and a method for controlling an information processing terminal apparatus, which are disclosed in the application, takes effect that can transmit data quickly using short-range wireless communication that competes with another communication.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An information processing terminal apparatus comprising:
a first communication unit (6) that performs first short-range wireless communication and second short-range wireless communication that communicates in a state of performing the first short-range wireless communication;
a second communication unit (5) that performs third short-range wireless communication that competes with the second short-range wireless communication;
a third communication unit (7) that performs fourth short-range wireless communication that transmits and receives setting information of the first short-range wireless communication and the third short-range wireless communication;
a communication establishment unit (4) that causes the third communication unit (7) to perform the fourth short-range wireless communication with another information processing terminal apparatus when the another information processing terminal apparatus approaches, and establishes one or both of connections to the another information processing terminal apparatus in the first short-range wireless communication and the third short-range wireless communication, based on transmitted and received setting information; and
a communication control unit (32) that determines whether or not the second short-range wireless communication is used based on input communication information, and controls the communication establishment unit (4) not to establish a connection in the third short-range wireless communication when the second short-range wireless communication is used.

2. The information processing terminal apparatus according to claim 1, wherein
the first short-range wireless communication is Bluetooth communication in BlueTooth (BT) 3.0 + High Speed (HS),
the second short-range wireless communication is communication using wireless Local Aria Network (LAN) in BlueTooth (BT) 3.0 + High Speed (HS),
the third short-range wireless communication is WiFi communication, and
the fourth short-range wireless communication is Near Field Communication (NFC) communication.

3. The information processing terminal apparatus according to claim 1 or 2, wherein the communication control unit (32) receives input of a direction to use the first communication unit (6) and a size of data to transmit as the communication information, and determines to use the second short-range wireless communication when the data size is equal to or more than a predetermined value.

4. A method for controlling an information processing terminal apparatus that performs first short-range wireless communication, second short-range wireless communication that communicates in a state of performing the first short-range wireless communication, third short-range wireless communication that competes with the second short-range wireless communication, and fourth short-range wireless communication that transmits and receives setting information of the first short-range wireless communication and the third short-range wireless communication, the method comprising:
transmitting and receiving the setting information of the first short-range wireless communication and the third short-range wireless communication using the fourth short-range wireless communication when another information processing terminal apparatus approaches;
determining whether or not the second short-range wireless communication is used based on input communication information; and
when the second short-range wireless communication is used, not permitting establishment of a connection in the third short-range wireless communication to the another information processing terminal apparatus, and establishing a connection in the first short-range wireless communication to the another information processing terminal apparatus based on the transmitted and received setting information of the first short-range wireless communication.

5. A program which, when executed on an information processing terminal apparatus that performs first short-range wireless communication, second short-range wireless communication that communicates in a state of performing the first short-range wireless communication, third short-range wireless communication that competes with the second short-range wireless communication, and fourth short-range wireless communication that transmits and receives setting information of the first short-range wireless communication and the third short-range wireless communication, causes the apparatus to carry out the method of claim 4.
